# EUROPEAN PATENT SPECIFICATION

(11) **EP 1 488 845 B1**
(45) Date of publication and mention of the grant of the patent: **11.10.2006**
(21) Application number: 03425396.3
(22) Date of filing: 18.06.2003
(51) Int. Cl.: B01D 53/86

(54) **Catalytic decomposition of nitrous oxide (N2O)**
Katalytischen Zersetzung von Distickstoffmonoxid (N2O)
Décomposition catalytique d'oxyde nitreux (N2O)

(43) Date of publication of application: 22.12.2004
(73) Proprietor: Radici Chimica Spa, 28100 Novara (IT)
(72) Inventor: Alini, Stefano, 27051 Cava Manara (Pavia) (IT); Frigo, Emilio, 35137 Padova (IT); Rinaldi, Cinzia, 28064 Carpignano Sesia (Novara) (IT)
(74) Representative: Pistolesi, Roberto

(56) References cited:
- EP-A- 0 818 232
- EP-A- 1 040 862
- US-A- 5 366 708
- US-A- 5 759 500

## Description

The following is a description of an extremely efficient catalytic process for converting nitrous oxide (N₂O) into gaseous nitrogen and oxygen.

Nitrous oxide constitutes the main stratospheric source of NO and is believed to be implicated in the destruction of the ozone layer; moreover, it has been recognised as a gas which contributes to producing the greenhouse effect with a potential 270 times higher than CO₂ (on a weight basis and when calculated over 100 year time span).

Nitrous oxide is produced in chemical processes for the production of or utilising nitric acid.

It is estimated that 10% of the nitrous oxide emitted annually into the atmosphere derives from the adipic acid production.

N₂O content in adipic acid plant gaseous emissions can run as high as 65%, but more frequently peaks at 40% by volume. In general, these gases also contain water, oxygen and carbon dioxide. Water content is usually at the saturation level for the gas in question--the exact amount present being a function of system temperature and working pressure--but in general, a maximum of 1-2% by volume. Oxygen is always present, generally ranging from 5 to 15% by volume, and in contrast to carbon dioxide, which does not affect reactions, can influence reaction kinetics, depending on the type of catalyst utilised. Traces of volatile organic compounds and of NOₓ may also be present. NOₓ concentrations of up to 2000 ppm do not influence the present process. At the present state of the art, NOₓ removal is a known process, and can be carried out using various technologies designed for its recovery and/or destruction.

The catalytic decomposition of nitrous oxide exhibits several characteristics which do not depend on the type of catalytic system utilised. The principal purpose of this invention is the assessment and control of these aspects. In particular, the N₂O decomposition reaction is highly exothermic (-19.6 Kcal/mole). Unfortunately, most catalytic systems are unable to trigger the reaction at temperatures below several hundred degrees Celsius (generally above 300°C). Since the reaction is carried out in fixed-bed reactors on N₂O-laden industrial emissions, in the absence of an adequate control system, marked increases in temperature (up to and beyond 1000°C) can take place on the catalytic bed.

The exothermic nature of the reaction therefore gives rise to a series of problems which--if an industrial process is to be set up--must be dealt with and resolved. For example, high temperatures may lead to the following problems 1) damage: sintering of catalysts or of their supports--a well-known phenomenon--reducing catalytic activity and shortening catalyst life. 2) high investment costs for and careful selection of special heat-resistant materials used in the construction of reactor bodies. 3) Environmental regulation and compliance: the higher the temperature on the catalytic bed, the greater the risk of forming higher nitrogen oxides (NOₓ) which are subject to strict environmental laws.

Generally, it has been suggested that, in order to control catalytic bed temperature, the stream containing nitrous oxide be diluted. The dilution gas is generally composed of a part of the flow, purified (USP 6,056,928) and properly cooled so that the gas may act as a cooling agent (USP 5,200,162). This system, however, presents several disadvantages. For the reaction temperature to be controlled effectively, the concentration of nitrous oxide entering the reactor generally must not exceed 15% by volume. The emissions must therefore be diluted with large quantities of diluting gas, which can only be supplied by large-scale machinery. Several further complications arise if purified emissions are to be used as the dilutant, as they are at high temperature, but low pressure. 1) Since they are at a lower pressure than the N₂O-bearin emissions to be treated, they cannot simply be mixed in, but must first be mechanically re-pressurised by a compressor or booster. 2) Since they are at high temperature, they must paradoxically be cooled to avoid damaging the compressor, and then reheated for the reaction. These inherent inefficiencies in the existing systems render the process expensive.

EP 1 040 862 proposes a catalytic process, for the decomposition of nitrous oxide, that distributes the catalyst in a series of catalytic beds to improve the control of temperature. As described in the examples, in spite of this system set-up a large volume of dilutant is always necessary. The technology of multibeds reactor is known and used in state of the art to improve the control of temperature and to reduce the volume of the dilutant as showed in US 5,759,500 e US 3,467,492. In any case, to control the exothermia of the reaction, the flow containing nitrous oxide is diluted.

The present invention therefore has the following objectives: 1) to provide a system capable of allowing catalytic bed temperatures to be controlled at all times, thus making work at the maximum desired temperature possible avoiding the dilution of flow containing nitrous oxide to a concentration of 30% by volume. This value is normally attained in adipic acid production by machinery used to recover higher nitrogen oxides (NOx).
2) To provide for maximum heat recovery from the decomposition reaction, thus rendering an environmental protection process economically advantageous, as well.
3) To make it possible to work within a temperature range which minimises the formation of NOₓ, making the installation of a downstream NOₓ abatement system unnecessary.

Further objectives of the present invention are 5) to minimise the amount of energy required for triggering and maintaining the reaction, resulting in reduced fuel consumption in the start-up phase and greater heat recovery efficiency during normal operation of the nitrous oxide decomposition plant. 6) To make it possible to start up the reaction at the lowest allowable temperature, reducing the need--in industrial applications--for highly active, but expensive catalysts.

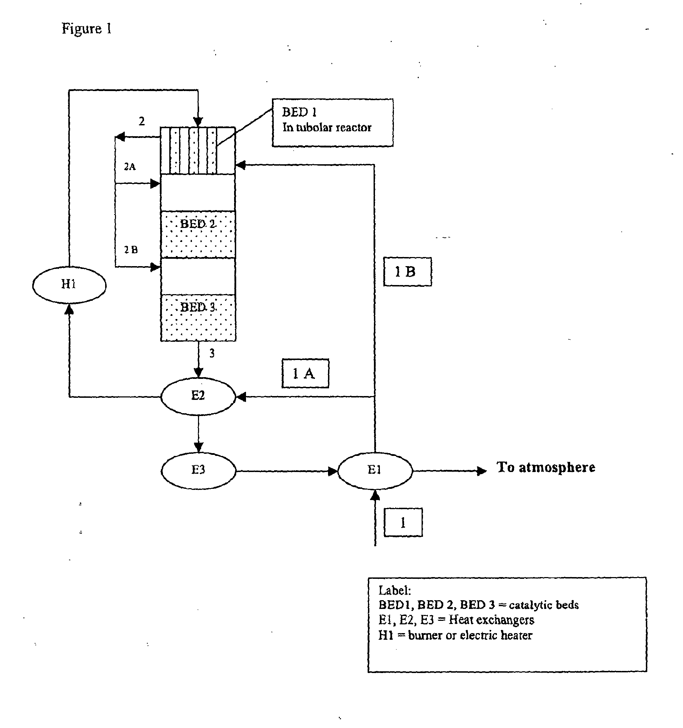

The system we have produced is designed to distribute the catalyst in a series of catalytic beds, whose number may vary as a function of the mass of gas to be treated (figure 1 shows, as an example, the diagram of a 3-bed system). In this way, a number of considerable advantages may be achieved. The first advantage is that of being able to divide the mass of the N₂O-bearing emissions (1) into a series of flows which may be sent at different temperatures to the catalytic beds upstream of the final catalytic bed.

According to the present invention (see figure 1), the catalyst of BED1 is placed into the tubes of a multitubular reactor; flow 1A, containing N₂O, is sent through the tubes without any dilution; flow 1B is sent through the shell.

Multitubular reactors, useful for the aim of the present invention, are well known and are described for instance in:
- *"Perry's Chemical Engineering Handbook" 7th edition, Robert H. Perry and Don W. Green; Mc Graw- Hill International Edition sections 7 and 23;*
   and in
- *H. Kramers and K.R. Westerterp, "Elements of Chemical Reactor Design and Operation ", Chapman and Hall Ltd. London (1963)*;
both of them cited here as references.

Flow 1A is pre-heated in heat exchanger E2 (or in a burner H1 during the start-up phase of the process) to the start-up temperature of the reaction. Flow 1A enters the catalytic BED 1 where nitrous oxide decomposition takes place, with heat evolution. Flow 1 B is made to pass into the shell of the multitubular reactor to control the temperature of the catalytic BED 1 removing the heat of reaction. The temperature of flow 1B, entering the shell of the multitubular reactor, may be adjusted through heat exchanger E1; in this manner it is possible to assure that the heat of reaction will be removed and the temperature of flow 2 will be set-up at a value to maintain the reaction triggered on the downstream beds. This section of the reactor is isothermal. The off-flow from the shell of the multitubular reactor (flow 2) is subdivided into a number of gaseous flows as much as the number of catalytic beds downstream BED 1. For example, in figure 1, flow 2 was subdivided into 2 flows 2A and 2B. These streams, containing nitrous oxide, are at the desired temperature to enter the catalytic beds.

Using this system set-up, the gas exiting the first catalytic bed (BED 1) may be considered the dilutant gas for the amount of gaseous emissions 2A to be sent upstream of the second catalytic bed (BED 2). By blending the two flows appropriately, a gaseous mixture is obtained with the N₂O concentration and temperature desired. This mixture then arrives in the second catalytic bed (BED 2), where nitrous oxide decomposition takes place. Being able to control N₂O intake concentration also ensures control of the maximum temperature desired in the second catalytic bed. In this manner, the heat contained in the gases exiting the catalytic beds may also be exploited in the most efficient way. As can be seen, the flow exiting the second bed (BED 2) becomes the dilutant for the subsequent quantity of gas (2B) pre-heated into the shell of multitubular reactor containing BED1 and this process is repeated according to the number of beds in which the catalyst is distributed.

After the final bed, comes exchanger (E2). By utilising the hot gasses exiting the reactor, this exchanger pre-heats to the minimum start-up temperature the quantity of gas (1A) to be sent to the first catalytic bed. Downstream from this exchanger, we find boiler (E3)--which is utilised for generating steam at the desired pressure --or any other heat recovery system. Downstream from the heat recovery system (E3), there is an exchanger (E1), which is needed for pre-heating to the proper temperature the entire volume of the gaseous emissions (1) entering the abatement system.

Therefore the dilutant is not needed; for this reason it is possible to eliminate booster or compressor and the process flow is simplified.

The control of exothermia of the nitrous oxide decomposition in the catalytic BED 1 is realised by indirect heat transfer in the multitubular reactor.

Downstream BED1 the control of the exothermia of the reaction is realised by direct heat transfer, i.e. blending a flow at high temperature, basically nitrous oxide free, with a flow containing nitrous oxide. In this manner the off-flow from the up-stream catalytic bed is cooled, the stream containing N₂O is heated and the mixture obtained will be at the minimum start-up temperature and at the desired concentration of N₂O.

Thus, the purpose of the present invention is to provide a multi-stage process for the catalytic decomposition of nitrous oxide. The stages are as follows:
(a) a gaseous flow 1 containing nitrous oxide is subdivided into at least two gaseous flows 1A and 1B;
(b) flow 1A is made to pass through a first catalytic bed (BED1), of the type suitable for nitrous oxide catalytic decomposition, placed into the tubes of a multitubular reactor with the resulting decomposition of at least a part of the nitrous oxide it contains;
(c) flow 1B is made to pass through the shell of a multitubular reactor;
(d) flow 2 exiting the shell of the multitubular reactor is mixed with the off-flow of catalytic BED 1;
(e) The gaseous mixture thus obtained is made to pass through a second catalytic bed BED2, also of the type suited to nitrous oxide catalytic decomposition and placed downstream of the first catalytic bed BED1, with the resulting decomposition of at least a part of the nitrous oxide it contains.

In one of the favourite aspects of the invention, catalytic beds downstream BED1 can be one over the other in series disposed; therefore the best configuration of the invention for the catalytic decomposition of nitrous oxide comprises the following stages:
(a) a gaseous flow (1) containing nitrous oxide is subdivided into two gaseous flows 1A and 1B;
(b) flow 1A is made to pass through a first catalytic bed (BED1), of a type suited to the decomposition of nitrous oxide, placed into the tubes of a multitubolar reactor, resulting in the at least partial breakdown of the nitrous oxide contained in the flow;
(c) flow 1 B is made to pass through the shell of the multitubular reactor and flow 2 exiting the shell of the multitubular reactor is divided in at least two gaseous flows 2A and 2B;
(d) the off-flow from the catalytic BED 1 is mixed with flow 2A;
(e) the gaseous mixture thus obtained is made to pass through a second catalytic bed (BED 2), also of the type suited to catalytic decomposition of nitrous oxide and placed downstream of the first catalytic bed (BED 1), resulting in the breakdown of at least a part of the nitrous oxide contained therein
(f) the off-flow from the catalytic BED 2 is mixed with flow 2B,
(g) the gaseous mixture thus obtained is made to pass through a third catalytic bed (BED 3), also of the type suited to catalytic decomposition of nitrous oxide and placed downstream of the second catalytic bed (BED 2), resulting in the breakdown of at least a part of the nitrous oxide contained therein

Flow 1 is a gaseous emission --normally stemming from the production of adipic acid--usually at the temperature of 25-40° C.

In the start-up phase of the process, flow 1A is made to pass through a burner or electric heater (H1) to be brought to the start-up temperature of the nitrous oxide decomposition reaction, i.e. to a temperature ranging from 300 to 600° C, preferably between 350 e 550° C. Flow 1A thus enters the catalytic bed (BED1), where nitrous oxide decomposition takes place, and exits the bed at a temperature ranging from 600 to 850°C. The off-flow from the catalytic bed (BED1), now basically nitrous oxide free (or having a nitrous oxide concentration below 500 ppm), is utilised to dilute flow 2A; its temperature thus being brought back to between 300 and 600°C, preferably between 350 and 550°C. The new flow thus obtained enters the next catalytic bed (BED2), where--once again--the nitrous oxide contained in flow 2A is broken down, and exits at a temperature ranging from 600 to 850°C. Should the process require--in accordance with the present invention--the presence of a third flow 2B, this last flow is mixed with the off-flow from previous catalytic bed (BED2), and its temperature is thus brought back to approx. 300-600°C, preferably to from 350 to 550° C, and the new flow thus obtained enters catalytic bed (BED3), where once again, nitrous oxide-contained in flow 2B, is broken down, the flow exiting at a temperature between 600 and 850° C. Obviously, this sequence may be repeated with the addition of one or more additional flows or one or more additional catalytic beds.

Gaseous flow 3, downstream from the final catalytic bed in the series, exhibits residual nitrous oxide content below 200 ppm.

Once at standard operating level flow 1A, prior to being made to pass through BED1, is placed in thermal contact with flow 3 via a heat exchanger (E2). In this manner, flow 1A is brought to start-up temperature of the nitrous oxide decomposition reaction, and no longer requires the activation of burner H1. Upon exiting heat exchanger E2, flow 3 is then placed in thermal contact with flow 1 via heat exchanger E1; in this manner, flow 1 may be heated to a temperature ranging from 60-200° C, preferably between 80-180° C. Additionally, prior to passing through heat exchanger E1, flow 3 may be made to pass through a heat-recovery system E3, preferably a boiler for producing steam.

Under normal operating conditions, when exiting heat exchanger E1, flow 3 has a temperature of approx. 130-200° C.

As in the start-up phase, under normal operating conditions, the flow exiting catalytic bed 1 (BED1), exhibiting a nitrous oxide concentration below 500 ppm, is utilised to dilute flow 2A; its temperature is thus brought back to a range between 300 and 600°C, preferably between 350 and 550°C. The new flow thus obtained enters catalytic BED2, where once again, decomposition of the nitrous oxide contained in flow 2A takes place, and the flow exits at a temperature ranging from 600 to 850°C. Obviously, the same procedure is repeated as required for a third catalytic BED3 or possible additional catalytic beds located downstream of BED3.

The system can be adapted to any gaseous emissions containing nitrous oxide in high concentrations, not necessarily stemming from adipic acid production plants, and also containing higher nitrogen oxides (NOₓ), water and / or oxygen. The scope of this invention is not the nature of the catalyst or its size and shape, but rather the process in which it is utilised. Thus, the use and success of the process described does not depend on the type of catalyst chosen, provided the catalyst adopted is suited to bringing about the nitrous oxide catalytic decomposition reaction. Thus, any and all catalysts capable of breaking down nitrous oxide into gaseous oxygen and nitrogen may be used in the process, and each bed can contain the same or a different catalyst. In the literature, there are numerous works which illustrate catalysts appropriate for the catalytic decomposition of nitrous oxide and which can thus be utilised in the process.

Some examples of catalysts belonging to the above-mentioned categories are described in EP1262224, WO 00/23176, WO 00/51715, US 5.612,009, US 5,705,136, US 5.562,888, EP 1197259, WO 94/27709, US 5,171,553, WO 99/34901, WO 94/27709, US 5,472,677, US 5,407,652, all cited here as a reference. Among these, the catalysts listed in the examples represent the choice of preference; furthermore, as should be clear from example 3, the catalysts contained in the catalytic beds can be of a different nature.

The strategy of distributing the catalyst over several beds also makes it possible to utilise different catalysts on each catalytic bed. For example, it can be useful to have, on the first bed (BED 1) a catalyst which makes it possible to trigger the reaction at the lowest temperature possible (as is generally the case with precious-metal-based catalysts) and to use--in subsequent beds (BEDs 2 and 3)--less expensive catalysts which are active at higher temperatures.

This means that during the start-up phase, the trigger temperature is quickly reached. Given the methods for carrying out our process, once the reaction is underway on the first bed, it is triggered on the downstream beds, as well. In this manner, the amount of energy which must be supplied in (H1), whether electrically, by the combustion of methane or any other fuel in the start-up phase of the system, is further reduced. Furthermore, under normal system operating conditions, the low start-up temperature needed to maintain the reaction requires little pre-heating of the flow 1A, allowing for greater heat recovery in (E3).

The classic configuration for multi-stage reactors calls for beds one over the other. However, beds placed co-axially or in separate reactors or with other configurations are also within the scope of the present invention. The number of beds may also vary according to the type of gas which is to be treated.

Our process can be easily managed by computerised process control systems which, however, must be developed as a function of the type of gas to be treated and of the type of catalysts selected for the various catalytic beds.

The following examples--with the understanding that the invention is in no wise limited to or by them--are meant to better illustrate the invention,

### EXAMPLES

Gas analysis was performed using a gas chromatograph with a thermoconducibility detector. In order to enhance analysis reproducibility, a sampling system with pneumatic valves was used. For separating nitrous oxide and carbon dioxide from the nitrogen/oxygen mixture, the column is a *Poropack* Q 160-180 µm (80/100 mesh), length 1.83 m (6 ft), d.e. 3.175 mm (1/8").

For separating the oxygen from the nitrogen, a molecular sieve column--13X, 250-355 µm (45/60 mesh), length 1.219 m (4 ft), d.e 3.175 mm (1/8")―was placed after the first column. Oven temperature for the gas chromatograph was programmed from 40 to 155°C and the flow-rate of the carrier was 30 cc/min.

The system utilised is composed of three superimposed catalytic beds, as illustrated in figure 1.

The gas utilised comes directly from an adipic acid production plant and has the following composition, varying as a function of the upstream system's operating conditions.

| | |
|---|---|
| Nitrous oxide | 30-40 % by weight |
| Nitrogen | 50-60 % by weight |
| Oxygen | 6-10 % by weight |
| Carbon dioxide | 2% by weight |
| Water | 0.2-0.5% by weight |
| NOₓ | 50-150 ppm |

The following examples illustrate some of the operating conditions under which the plant may be utilised. This is in order to demonstrate the effectiveness of the system in terms of exothermia control and decomposition efficiency. However, at the industrial level, a series of devices may be added designed to simplify and further improve system management.

### Example 1

One of the preferred catalysts for performing experimentation is the one described in EP1197259, supplied by the producer in standard industrial format. This consists of a mixture of lanthanum, copper and manganese oxides, supported on γ-allumina three-lobed, tri-forate pellets.

The catalyst was distributed in the three beds in the following manner:

| Bed | Kg of catalyst |
|---|---|
| BED 1 | 1.5 |
| BED 2 | 3.1 |
| BED 3 | 6.3 |

The intake temperature at BED 1 was maintained at 480°C. For a total system off-gas flow of 52.3 Kg/h, containing 40% nitrous oxide by weight, the following distributions were made:

| Flow | Kg/h |
|---|---|
| 1A | 13.075 |
| 2A | 13.075 |
| 2B | 26.15 |
| Total | 52.3 |

Under these conditions, the concentration in beds BED2 e BED 3 will always be brought back to 20% by weight, making exothermia control possible. Flows 2A and 2B, pre-heated at 80°C in E1, were fed into the shell of the multitubular reactor, from which they exit at 192 °C. At this temperature they were fed to catalytic beds 2 and 3. Under these conditions, the intake temperature stabilised at approx. 500° C and the off-flow temperature from each bed stabilised at approx. 800°C. The gas hourly space velocity (GHSV) on each bed is 4500 h⁻¹. The concentration of off-flow nitrous oxide from the reactor is 40-100 ppm, with a conversion rate of over 99.9 %.

### Example 2

A 4 beds reactor permits a better control of the temperatures. The fourth bed is placed downstream catalytic BED 3. In this manner flow 1A is lower than in the previous example, whereas flow 1B is larger.

The catalyst was distributed in the four beds in the following manner:

| Bed | Kg of catalyst |
|---|---|
| BED 1 | 0.7 |
| BED 2 | 1.5 |
| BED 3 | 3 |
| BED 4 | 6 |

The intake temperature at BED 1 was maintained at 480°C. For a total system off-gas flow of 52.32 Kg/h, containing 40% nitrous oxide by weight, the following distributions were made:

| Flow | Kg/h |
|---|---|
| 1A | 6.54 |
| 2A | 6.54 |
| 2B | 13.08 |
| 2C | 26.16 |
| Total | 52.32 |

Under these conditions, the concentration in beds BED2, BED 3 and BED 4 will always be brought back to 20% by weight, making exothermia control possible. Flows 2A, 2B and 2C, pre-heated at 120°C in E1, were fed into the shell of the multitubular reactor, from which they exit at 168 °C. At this temperature they were fed to catalytic beds 2, 3 and 4. Under these conditions, the intake temperature stabilised at approx. 490° C and the off-flow temperature from each bed stabilised at approx. 790°C. The gas hourly space velocity (GHSV) on each bed is 4500 h⁻¹. The concentration of off-flow nitrous oxide from the reactor is 40-100 ppm, with a conversion rate of over 99.9 %.

### Example 3

The distribution of the catalyst in several beds makes it possible to utilise different catalysts on each catalytic bed. In the following example, BED 1 was loaded with the zeolitic catalyst described in WO99/34901 supplied by the manufacturer in industrial format; beds BED 2 e BED 3 were loaded with the catalyst defined in example 1. With this set-up, the reaction can be triggered at 350°C.

The catalysts were distributed in the three beds in the following manner:

| Bed | Type of catalyst | Kg of catalyst |
|---|---|---|
| BED 1 | Zeolite WO99/34901 | 1 |
| BED 2 | Mixed Oxides EP1197259 supported | 3 |
| BED 3 | Mixed Oxides EP1197259 supported | 6 |

Intake temperature at BED 1 was maintained at 350°C. For a total system off-gas flow equivalent to 52.3 Kg/h, containing 40% nitrous oxide by weight, the following distributions were performed:

| Flow | Kg/h |
|---|---|
| 1A | 13.075 |
| 2A | 13.075 |
| 2B | 26.15 |
| Total | 52.3 |

Under these conditions, the concentration in beds BED2 e BED 3 will always be brought back to 20% by weight, making exothermia control possible. Flows 2A e 2B, pre-heated at 180°C in E1, were fed into the shell of the multitubular reactor, from which they exit at 300 °C. At this temperature they were fed to catalytic beds 2 and 3. Under these conditions, the intake temperature in BED 2 stabilised at approx. 476° C and the off-flow temperature from BED 2 stabilised at approx. 780°C; the intake temperature in BED 3 stabilised at approx. 540° C and the off-flow temperature from BED 3 stabilised at approx. 840°C. The gas hourly space velocity (GHSV) on each bed is 4500 h⁻¹. The concentration of off-flow nitrous oxide from the reactor is 40-100 ppm, with a conversion rate of over 99.9 %.

## Claims

1. A process for the catalytic decomposition of nitrous oxide (N₂O) into gaseous nitrogen and oxygen, comprising the following stages:
(a) a gaseous flow 1 containing nitrous oxide is subdivided into two gaseous flows 1A and 1B;
(b) flow 1A is made to pass through a first catalytic bed (BED1), placed into the tubes of a multitubular reactor;
(c) flow 1B is made to pass through the shell of the multitubular reactor;
(d) flow 2 exiting the shell of the multitubular reactor is mixed with the off-flow of catalytic BED 1;
(e) the gaseous mixture thus obtained is made to pass through a second catalytic bed (BED2), placed downstream of the first catalytic bed (BED1).

2. A process, according to claim 1, comprising the following stages:
(a) a gaseous flow (1) containing nitrous oxide is subdivided into two gaseous flows 1A and 1B;
(b) flow 1A is made to pass through a first catalytic bed (BED1), placed into the tubes of a multitubular reactor;
(c) flow 1B is made to pass through the shell of the multitubular reactor and flow 2 exiting the shell of the multitubular reactor is divided in at least two gaseous flows 2A and 2B;
(d) the off-flow from the catalytic BED 1 is mixed with flow 2A;
(e) the gaseous mixture thus obtained is made to pass through a second catalytic bed (BED 2), placed downstream of the first catalytic bed (BED 1),
(f) the off-flow from the catalytic BED 2 is mixed with flow 2B,
(g) the gaseous mixture thus obtained is made to pass through a third catalytic bed (BED 3), placed downstream of the second catalytic bed (BED 2).

3. A process, according to the preceding claims, **characterised by** the fact that--in heat exchanger E2, via thermal exchange with gaseous flow 3 exiting the last catalytic bed--catalytic BED1 intake gas flow temperature is brought to 300-600° C, preferably between 350 and 550°C.

4. A process, according to the preceding claims, **characterised by** the fact that-- prior to entering the next catalytic bed (BED2)--the temperature of catalytic BED1 off-flow gas is lowered to 300-600° C, preferably between 350 and 550°C, by admixture with gas flow 2A.

5. A process, according to the preceding claims, **characterised by** the fact that-- prior to entering the next catalytic bed (BED3)--the temperature of catalytic BED2 off-flow gas is lowered to 300-600° C, preferably between 350 and 550°C, by admixture with gas flow 2B.

6. A process, according to the preceding claims, **characterised by** the fact that by thermal exchange with gas flow 3 in heat exchanger E1 situated downstream from exchanger E2, the temperature of gas flow 1 is brought to 60-200° C.

## Patentansprüche

1. Der chemische Vorgang für die katalytische Zersetzung des Stickstoffoxyduls (N₂O) in gasförmigen Stickstoff und Sauerstoff, geschieht durch folgende Stufen:
(a) ein gasförmiger Fluss 1, der Stickstoffoxydul enthält, wird in zwei gasförnlige Flüsse 1A und 1B unterteilt;
(b) der gasförmige Fluss 1A, wird durch ein erstes katalytisches Bett (BED 1) geleitet, das in die Röhren eines mehrröhrigen Reaktors eingeführt wird;
(c) der gasförmige Fluss 1B, wird durch den Mantel des mehrröhrigen Reaktors geleitet;
(d) Fluss 2, der aus den Mantel des mehrröhrigen Reaktors tritt, wird mit dem Ausfluss aus dem katalytischen BED 1 gemischt;
(e) das so erlangte gasförmige Gemisch, wird durch ein zweites katalytisches Bett geleitet (BED 2), das flussabwärts des ersten katalytischen Betts BED 1 platziert wird.

2. Ein chemischer Vorgang, nach Forderung 1, enthält folgende Stufen:
(a) ein gasförmiger Fluss (1), der Stickstoffoxydul enthält, wird in zwei gasförmige Flüsse 1A und 1B unterteilt;
(b) Fluss 1A, wird durch ein erstes katalytisches Bett (BED 1) geleitet, das in die Röhren eines mehrröhrigen Reaktors eingeführt wird;
(c) Fluss 1B, wird durch den Mantel des mehrröhrigen Reaktors geleitet, und Fluss 2, der aus den Mantel des mehrröhrigen Reaktors austritt, wird in mindestens zwei gasförmige Flüsse 2A und 2B unterteilt;
(d) der Ausfluss 2A aus dem katalytischen BED 1 wird mit Fluss 2A gemischt;
(e) das so erlangte gasförmige Gemisch, wird durch ein zweites katalytisches Bett (BED 2) geleitet, das flussabwärts des ersten katalytischen Bettes (BED 1) platziert wird,
(f) der Ausfluss aus dem katalytischen BED 2, wird mit Fluss 2B gemischt,
(g) das so erlangte gasförmige Gemisch wird durch ein drittes katalytisches Bett (BED 3) geleitet, das flussabwärts des katalytischen Bettes (BED 2) platziert wird.

3. Ein chemischer Vorgang nach den vorstehenden Forderungen, wird durch die Tatsache charakterisiert, dass -im Wärmeaustauscher E2 durch Temperaturaustausch mit dem gasförmigen Fluss 3 der aus dem letzten katalytischen Bett austritt - die Gasflusstemperatur beim Eintritt in das katalytische BED 1 auf 300-600° C gebracht wird, vorzugsweise zwischen 350 und 550°C.

4. Ein chemischer Vorgang nach den vorstehenden Forderungen, wird durch die Tatsache charakterisiert, dass - vor dem Eintritt in das nächste katalytische Bett (BED 2) - die Temperatur des Ausflussgases aus dem katalytischen BED 1 durch Mischen mit dem Gasfluss 2A auf 300-600° C gesenkt wird, vorzugsweise zwischen 350 und 550° C.

5. Einen chemischer Vorgang nach den vorstehenden Forderungen, wird durch die Tatsache charakterisiert, dass - vor dem Eintritt in das nächste katalytische Bett (BED 3) - die Temperatur des Ausflussgases aus dem katalytischen BED 2 durch Mischen mit dem Gasfluss 2B auf 300-600° C gesenkt wird, vorzugsweise zwischen 350 und 550°C.

6. Ein chemischer Vorgang nach den vorstehenden Forderungen, wird durch die Tatsache charakterisiert, dass die Temperatur von Gasfluss 1, durch Wärmeaustausch mit Gasfluss 3 im Wärmeaustauscher E1, der flussabwärts vom Austauscher E2 platziert ist auf 60-200° C gebracht wird.

## Revendications

1. Un processus pour la décomposition catalytique du protoxyde d'azote (N₂O) en Azote et Oxygène sous forme gazeuse, comprenant les étapes suivantes:
(a) Un flux gazeux 1 contenant du protoxyde d'azote est divisé en deux flux gazeux 1A et 1B;
(b) On fait passer le flux 1A dans un premier lit catalytique (BED1), placé dans les tubes d'un réacteur multitubulaire;
(c) On fait passer le flux 1 B dans la coque du réacteur multitubulaire;
(d) Le flux 2 sortant de la coque du réacteur multitubulaire est mélangé au flux sortant du lit catalytique BED 1;
(e) On fait passer le mélange gazeux ainsi obtenu au travers d'un second lit catalytique (BED2), placé en aval du premier lit catalytique (BED1).

2. Un processus, suivant la revendication 1, comprenant les étapes ci-dessous :
(a) Un flux gazeux (1) contenant du protoxyde d'azote est divisé en deux flux gazeux 1A et 1B;
(b) On fait passer le flux 1A, dans un premier lit catalytique (BED1), placé dans les tubes d'un réacteur multitubulaire;
(c) On fait passer le flux 1 B dans la coque du réacteur multitubulaire et le flux 2 sortant de la coque du réacteur multitubulaire est divisé en au moins deux flux gazeux 2A et 2B;
(d) Le flux sortant du lit catalytique BED 1 est mélangé au flux 2A;
(e) On fait passer le mélange gazeux ainsi obtenu dans un second lit catalytique (BED 2), placé en aval du premier lit catalytique (BED 1),
(f) Le flux sortant du lit catalytique BED 2 est mélangé au flux 2B,
(g) On fait passer le mélange gazeux ainsi obtenu dans un troisième lit catalytique (BED 3), placé en aval du second lit catalytique (BED 2).

3. Un processus, suivant les précédentes revendications, **caractérisé par le fait que** dans l'échangeur de chaleur E2, la température du flux entrant du lit catalytique BED1 est portée à 300-600° C, de préférence entre 350 et 550° C, et ce au travers d'un échange thermique avec le flux gazeux 3 sortant du dernier lit catalytique.

4. Un processus, suivant les précédentes revendications, **caractérisé par le fait que**, avant d'entrer dans le prochain lit (BED2), la température du flux gazeux sortant du lit catalytique BED1 est abaissée à 300-600° C, de préférence entre 350 et 550° C, par incorporation avec le flux gazeux 2A.

5. Un processus, suivant les précédentes revendications, **caractérisé par le fait que**, avant d'entrer dans le prochain lit catalytique (BED3), la température du flux gazeux sortant du lit catalytique BED2 est abaissée à 300-600° C, de préférence entre 350 et 550° C, par incorporation avec le flux gazeux 2B.

6. Un processus, suivant les précédentes revendications, **caractérisé par le fait que** par échange thermique avec le flux gazeux 3 dans l'échangeur de chaleur E1 situé en aval de l'échangeur E2, la température du flux gazeux est portée à 60-200° C.
